# EUROPÄISCHE PATENTSCHRIFT

(11) **EP 1 649 153 B1**
(45) Veröffentlichungstag und Bekanntmachung des Hinweises auf die Patenterteilung: **11.07.2018**
(21) Anmeldenummer: 04728576.2
(22) Anmeldetag: 21.04.2004
(51) Int. Cl.: F02D 41/30, F02D 41/12, F02P 5/15, F02D 37/02, F02D 41/40

(54) **VERFAHREN UND VORRICHTUNG ZUR STEUERUNG DES ÜBERGANGS ZWISCHEN DEM NORMALBETRIEB UND DEM BETRIEB MIT SCHUBABSCHALTUNG EINES MIT KRAFTSTOFF-DIREKTEINSPRITZUNG BETRIEBENENEN OTTOMOTORS**
METHOD AND DEVICE FOR CONTROLLING THE TRANSITION BETWEEN NORMAL OPERATION AND OVERRUN FUEL CUT-OFF OPERATION OF AN OTTO ENGINE OPERATED WITH DIRECT FUEL INJECTION
PROCÉDÉ ET DISPOSITIF POUR COMMANDER LE PASSAGE DU FONCTIONNEMENT NORMAL À UN FONCTIONNEMENT AVEC COUPURE D'ALIMENTATION EN POUSSÉE SUR UN MOTEUR À COMBUSTION INTERNE ET INJECTION DIRECTE DE CARBURANT

(30) Priorität: 28.07.2003 DE 10334401
(43) Veröffentlichungstag der Anmeldung: 26.04.2006
(73) Patentinhaber: Continental Automotive GmbH, 30165 Hannover (DE)
(72) Erfinder: WEISS, Frank, 93080 Pentling/Grasslfing (DE); ZHANG, Hong, 93105 Tegernheim (DE)
(86) Internationale Anmeldenummer: PCT/EP2004/050572
(87) Internationale Veröffentlichungsnummer: WO 2005/012712

(56) Entgegenhaltungen:
- DE-A- 10 154 974
- US-A- 5 722 363
- US-B1- 6 345 499
- PATENT ABSTRACTS OF JAPAN Bd. 016, Nr. 253 (M-1263), 9. Juni 1992 (1992-06-09) & JP 04 060148 A (FUJI HEAVY IND LTD), 26. Februar 1992 (1992-02-26)
- PATENT ABSTRACTS OF JAPAN Bd. 018, Nr. 143 (M-1574), 9. März 1994 (1994-03-09) & JP 05 321718 A (TOYOTA MOTOR CORP), 7. Dezember 1993 (1993-12-07)

## Beschreibung

Die Erfindung geht von einem Verfahren beziehungsweise von einer Vorrichtung nach dem Oberbegriff der nebengeordneten Ansprüche 1 und 11 aus, mit der der Übergang zwischen einem Normalbetrieb und einem Betrieb mit Schubabschaltung bei einem mit Kraftstoff-Direkteinspritzung betriebenen Ottomotor steuerbar ist. Beim Umschalten vom Normalbetrieb auf den Betrieb mit Schubabschaltung entsteht zwangsläufig ein Drehmomentensprung, der einen unrunden Lauf des Ottomotors beziehungsweise ein unerwünschtes Ruckeln des Fahrzeugs nach sich ziehen kann. Die Vorteile, die per se durch die Schubabschaltung entstehen, beispielsweise eine Reduzierung des Kraftstoffverbrauchs, verbesserte Bremswirkung des Motors, geringere Lärmemissionen, müssen mit einer Verschlechterung des Fahrkomforts erkauft werden. Das gleiche Problem entsteht, wenn nach dem Betrieb mit Schubabschaltung der normale Fahrbetrieb des Fahrzeugs wieder aufgenommen werden soll und der Ottomotor wieder ein gewünschtes Drehmoment erzeugen und an das Fahrzeug abgeben soll.

Zur Reduzierung dieses unerwünschten beziehungsweise zulässigen Drehmomentensprungs, der durch das Abschalten der Kraftstoffeinspritzung im Schubbetrieb entsteht, wurden schon verschiedene Maßnahmen vorgeschlagen. Beispielsweise wurde bei älteren Motoren der Übergang nicht gesteuert, d.h. es wurde im Schubbetrieb die Kraftstoffeinspritzung einfach unterbunden.

Eine bekannte und relativ wirkungsvolle Maßnahme gegen den Drehmomentensprung beim Übergang auf die Schubabschaltung besteht darin, den Zündwinkel so weit in Richtung Spätzündung zu verstellen, dass die Verbrennung des Kraftstoff-Luftgemisches im Zylinder des Ottomotors noch zuverlässig gewährleistet ist. Der Kraftstoff wird dabei weiterhin bis zur Umschaltung in den Schubbetrieb während der Ansaugphase des Ottomotors eingespritzt. Dadurch resultiert ein reduziertes Drehmoment, da das Kraftstoff-Luftgemisch in der Spätzündungsphase nicht mehr seine volle Leistung entfalten kann. In vielen Fällen reicht diese Reduzierung allerdings nicht aus, um einen sanften Übergang in die Schubabschaltung zu erreichen.

Aus der DE 101 54 974 A1 ist ein Verfahren zur Umschaltung einer Brennkraftmaschine von einem gefeuerten Betrieb in einen ungefeuerten Betrieb bekannt geworden, wobei während der Übergangsphase der Zündwinkel in Richtung "spät" verstellt und der Lambda-Sollwert in Richtung "mager" verschoben wird. Dadurch soll ein katalysatorschonender Übergang erreicht werden.

Aus der Offenlegungsschrift JP 08240119 ist ein Verfahren zur Steuerung des Übergangs von einem ungefeuerten Betrieb zu einem gefeuerten Betrieb einer Brennkraftmaschine mit Kraftstoffdirekteinspritzung bekannt, bei dem die Brennkraftmaschine zunächst in einem Schichtladebetrieb betrieben wird, die zugeführte Kraftstoffmenge sukzessive erhöht wird und anschließend in einen Homogenbetrieb umgeschaltet wird.

Der Erfindung liegt die Aufgabe zugrunde, ein Verfahren beziehungsweise eine Vorrichtung zu schaffen, mit dem bzw. bei der eine deutlich größere Reduzierung des Drehmomentensprungs im Homogenbetrieb erzielt werden kann. Diese Aufgabe wird mit den Merkmalen der nebengeordneten Ansprüche 1 und 10 gelöst. Bei dem erfindungsgemäßen Verfahren beziehungsweise der Vorrichtung zur Steuerung des Übergangs zwischen dem Normalbetrieb und der Schubabschaltung bei einem mit Kraftstoff-Direkteinspritzung betriebenen Ottomotor mit den kennzeichnenden Merkmalen der nebengeordnete Ansprüche 1 und 11 ergibt sich der Vorteil, dass die Drehmomentenreduzierung wesentlich stärker ausgebildet ist, als wenn nur der Zündwinkel verstellt wird. Denn durch das Einspritzen wenigstens einer Teilmenge von Kraftstoff während der Kompressionsphase ergeben sich für die Drosselung des Drehmomentes drei günstige Effekte. Zum einen verringert sich durch die geringere Innenkühlung im Zylinder die angesaugte Luftmasse, weil ein Teil der eingespritzten Kraftstoffmenge zu dem Zeitpunkt eingespritzt wird, wenn die Ventile des Zylinders bereits geschlossen sind (Kompressionsphase). Des Weiteren verschlechtert sich der Wirkungsgrad der Verbrennung, da bei der Einspritzung in der Kompressionsphase der im Zylinder befindliche Kraftstoff weniger stark verwirbelt wird. Schließlich hat sich durch Messungen in vorteilhafter Weise auch gezeigt, dass sich die Laufruhe des Ottomotors nicht ändert, wenn nach der Einspritzung von Kraftstoff in der Kompressionsphase der Zündwinkel noch weiter in Richtung spät verstellt wird. Folglich kann der Zündwinkel noch weiter in Richtung Spätzündung verstellt werden, als dies bei der bekannten reinen Zündwinkelverstellung der Fall wäre. Als besonders vorteilhaft wird weiter angesehen, dass durch das erfindungsgemäße Verfahren beziehungsweise durch die Vorrichtung der Drehmomentensprung wesentlich besser reduziert werden kann, so dass die Vorteile der Schubabschaltung genutzt werden können, ohne dass der Fahrkomfort für die Insassen des Fahrzeugs durch den Drehmomentensprung beeinträchtigt wird.

Durch die in den abhängigen Ansprüchen aufgeführten Maßnahmen sind vorteilhafte Weiterbildungen und Verbesserungen des in den nebengeordneten Ansprüchen 1 und 11 angegebenen Verfahrens beziehungsweise der Vorrichtung angegeben. So kann der Kraftstoff in Form einer Mehrfacheinspritzung in einen Zylinder des Ottomotors eingespritzt werden. Ein besonders einfach zu steuerndes Verfahren ergibt sich, wenn zunächst die angesaugte Luftmasse reduziert und danach der Zündwinkel auf einen für diesen Betrieb vorgegebenen ersten Minimalwert zurückgenommen wird, bei dem noch eine störungsfreie Verbrennung des Kraftstoff-Luftgemisches möglich ist. Dadurch ist sichergestellt, dass auch bei diesen ungünstigen Verhältnissen noch eine sichere Verbrennung des Kraftstoff-Luftgemisches gewährleistet ist und bei dieser Betriebsart noch ein gewisser Drehmomentenanteil erzeugt wird.

Nach Erreichen des minimalen Zündwinkels wird während der Kompressionsphase der Kraftstoff bei geschlossenen Ventilen in den Zylinder eingespritzt. Dieses erfolgt entgegen dem sonst üblichen Vorgehen, bei dem der Kraftstoff in der Ansaugphase, d.h. bei geöffneten Ventilen eingespritzt wird. Bei dem erfindungsgemäßen Verfahren ergibt sich dadurch der Vorteil, dass der Zündwinkel noch weiter zurückgenommen werden kann, als diese bei der bekannten Zündwinkelverstellung gewesen wäre. Der Zündwinkel kann nun auf einen für die Mehrfacheinspritzung geltenden niedrigeren zweiten Minimalwert zurückgenommen werden, da das Kraftstoff-Luftgemisch im Zylinder weiterhin brennfähig bleibt.

Erst nach Erreichen des zweiten Minimalwertes für den Zündwinkel kann die Kraftstoffeinspritzung abgeschaltet und auf den Betrieb mit Schubabschaltung umgeschaltet werden.

Beim Umschalten des Fahrzeugs vom Betrieb mit Schubabschaltung auf den Normalbetrieb wird zunächst geprüft, ob es erforderlich ist, dass die Einspritzung durchgeführt wird. Wenn dies der Fall ist, wird der einzuspritzende Kraftstoff in der Kompressionsphase abgesetzt. Dadurch wird das Drehmoment langsam wieder aufgebaut und ein unerwünschter Drehmomentensprung vermieden.

Um den Übergang zum Normalbetrieb zu erleichtern, wird die anzusaugende Luftmasse vergrößert und der Zündwinkel in Richtung Frühzündung verstellt.

Wird ein vorgegebenes gewünschtes Drehmoment erreicht, dann kann auf die Kraftstoff-Einspritzung in der Ansaugphase umgeschaltet werden. Der Steuervorgang für die Umschaltung ist damit abgeschlossen.

Eine Weiterbildung der Vorrichtung ist, dass der Kraftstoff in Teilmengen, beispielsweise in zwei Teilmengen in der Ausgangsphase und in der Kompressionsphase abgesetzt werden kann. Dadurch kann auf einfache Weise eine Anpassung an unterschiedliche Motorvarianten oder Lastzuständen des Motors durchgeführt werden. Das Verfahren ist daher universell anwendbar.

Ein Ausführungsbeispiel der Erfindung ist in der Zeichnung dargestellt und wird in der nachfolgenden Beschreibung näher erläutert.
- Figur 1: zeigt ein Ausführungsbeispiel mit einem ersten Diagramm für die Steuerung der Umschaltung vom Normalbetrieb in den Betrieb mit Schubabschaltung,
- Figur 2: zeigt ein zweites Diagramm für die Steuerung der Umschaltung von dem Betrieb mit Schubabschaltung in den Normalbetrieb,
- Figur 3: zeigt in schematischer Darstellung ein Blockschaltbild der erfindungsgemäßen Vorrichtung und
- Figur 4: zeigt ein Flussdiagramm, das den Übergang vom Normalbetrieb in den Betrieb mit Schubabschaltung veranschlaulicht.

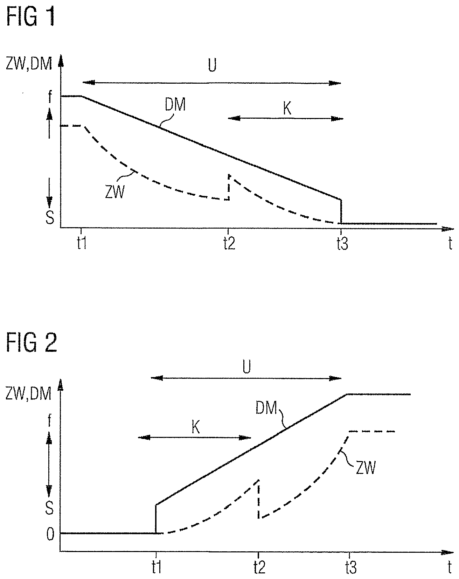

Das Diagramm in Figur 1 zeigt den schematischen Ablauf einer Umschaltung vom Normalbetrieb eines mit Kraftstoff-Direkteinspritzung betriebenen Ottomotors in den Betrieb mit Schubabschaltung. Bei dem Diagramm ist auf der x-Achse eine Zeit t entsprechend dem Drehwinkel der Kurbelwelle aufgetragen, während auf der y-Achse das Drehmoment und der Zündwinkel aufgetragen sind. Nach oben ist die Frühzündung f und nach unten die Spätzündung s aufgetragen. Die Kurve DM zeigt den Verlauf des ermittelten Drehmomentes und die Kurve ZW zeigt den Verlauf des aktuellen Zündwinkels während der Umschaltphase.

Im linken Teil des Diagramms wird der Ottomotor bis zum Zeitpunkt t1 im Normalbetrieb betrieben. Entsprechend der Kurve DM ist das abgegebene Drehmoment relativ hoch. Da das Drehmoment am Motor nicht direkt gemessen werden kann, wird es in der Regel auf rechnerischem Wege mit Hilfe eines Drehmomentenmodells geschätzt. Zur Bestimmung eines aktuellen Drehmomomentes werden verschiedene Motor- und Betriebsparameter erfasst und in das Drehmomentenmodell eingegeben, beispielsweise eine Drehzahl, eine Gaspedalstellung, eine Drosselklappenstellung, der Zündwinkel, der Einspritzmodus, Temperatur, Fahrzeuggeschwindigkeit usw. Das Drehmomentenmodell ist per se bekannt und muss daher nicht näher erläutert werden.

Wie dem Diagramm weiter zu entnehmen ist, ist die Kurve für den Zündwinkel ZW bis zum Zeitpunkt t1 auf Frühzündung f gestellt. Die Verstellung der Zündung erfolgt in der Regel auf elektronischem Weg und basiert auf den Signalen eines Drehzahlsensors.

Die Umschaltphase U in den Betrieb Schubabschalten beginnt ab dem Zeitpunkt t1 und endet zum Zeitpunkt t3. Die Kurven sind zum besseren Verständnis verzerrt dargestellt. Ab dem Zeitpunkt t1 wird durch Verstellen der Drosselklappe die Luftmasse im Zylinder auf einen minimalen Wert zurückgenommen und entsprechend der Zündwinkel ZW auf einen ersten Minimalwert in Richtung Spätzündung s verstellt. Der erste Minimalwert für den Zündwinkel ZW, bei dem noch eine zuverlässige Verbrennung des Kraftstoff-Luftgemisches gewährleistet ist, wird zum Zeitpunkt t2 erreicht. Daraufhin verringert sich das Drehmoment entsprechend der Kurve DM. Zum Zeitpunkt t2 beginnt die Einspritzung in der Kompressionsphase K, die bis zum Zeitpunkt t3 andauert. In dieser Zeitspanne t2-t3 wird nun die Kraftstoffeinspritzung nicht abgeschaltet, sondern wenigstens eine Teilmenge in der Kompressionsphase abgesetzt. Die Einspritzung kann in der Kompressionsphase, wenn die Ventile des Zylinders geschlossen sind, in einer Teilmenge, wobei die andere Teilmenge in der Ausgangsphase eingespritzt wird, oder alternativ komplett in einem Einspritzzyklus abgesetzt werden.

Durch die Einspritzung in der Kompressionsphase reduziert sich das Drehmoment weiter, wie aus dem Verlauf der Kurve DM ersichtlich ist. Der Zündwinkel ZW wird kurzzeitig in Richtung früh verstellt und kann anschließend auf einen zweiten Minimalwert abgesenkt werden, der noch niedriger ist als der erste Minimalwert. Der zweite Minimalwert für den Zündwinkel ZW wird zum Zeitpunkt t3 erreicht. Jetzt ist das Drehmoment soweit abgesenkt worden, dass in den Betrieb mit Schubabschaltung umgeschaltet werden kann, ohne dass die Laufruhe des Ottomotors spürbar beeinträchtigt wird. Es wurde somit ein wesentlich sanfterer Übergang zur Schubabschaltung erreicht.

Wird dem Motor wieder ein größeres Drehmoment abverlangt, dann wird in den Normalbetrieb zurückgeschaltet. Dieser Vorgang läuft in umgekehrter Weise ab und wird nachfolgend an Hand von Figur 2 näher erläutert.

Das Diagramm in Figur 2 ist entsprechend dem Diagramm der Figur 1 aufgebaut. Wie Figur 2 entnehmbar ist, beginnt die Rückschaltung in den Normalbetrieb ab dem Zeitpunkt t1. Anschließend folgt die Umschaltphase U bis um Zeitpunkt t3. Die Einspritzung in der Kompressionsphase K verläuft zwischen den beiden Zeitpunkten t1 und t2.

Es ist vorgesehen, dass in Abhängigkeit von der aktuellen Betriebssituation zuvor eine Bewertung durchgeführt wird, ob eine Einspritzung von Kraftstoff in der Kompressionsphase auch bei der Rückschaltung in den Normalbetrieb erforderlich ist. Beispielsweise kann es sein, dass bei niedriger Drehzahl des Motors auf die Einspritzung in der Kompressionsphase verzichtet wird und dafür gleich in der Ansaugphase eingespritzt wird. Aus Verständnisgründen wird nachfolgend der Fall erläutert, wenn auch bei der Rückschaltung Kraftstoff in der Kompressionsphase K eingespritzt werden soll.

Gemäß Figur 2 sind bis zum Zeitpunkt t1 die Zündung und die Einspritzung abgeschaltet. Danach wird der Zündwinkel bis zum Zeitpunkt t2 in Richtung früh (Frühzündung f) verstellt. In dieser Kompressionsphase zwischen t1 und t2 erfolgt die Einspritzung von Kraftstoff in Teilmengen oder als Einzelimpuls, wie zuvor beschrieben wurde. Ab dem Zeitpunkt t2 ist das Drehmoment DM soweit angestiegen, dass auf eine Einspritzung in der Ansaugphase umgeschaltet werden kann, wenn die Ventile des Zylinders geöffnet sind. Der Zündwinkel ZW wird dann entsprechend der gestrichelt dargestellten Kurve in Richtung Frühzündung f verstellt. Ab dem Zeitpunkt t3 ist das Drehmoment wieder so weit angewachsen, dass ohne spürbare Beeinträchtigung der Laufruhe des Ottomotors der Normalbetrieb wieder aufgenommen werden kann.

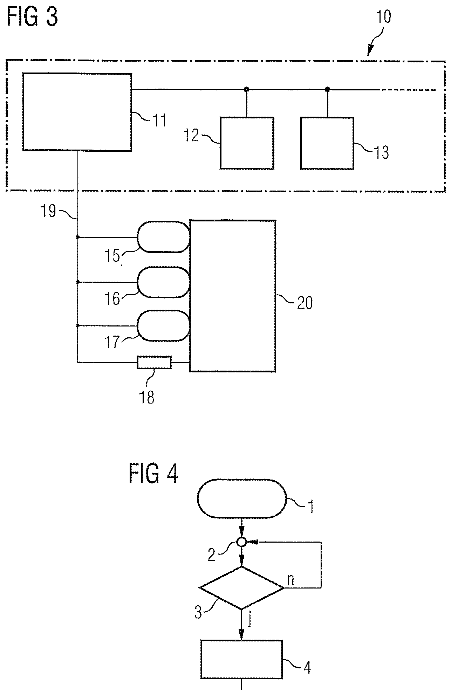

Figur 3 zeigt in schematischer Darstellung eine Vorrichtung zur Steuerung des Übergangs zwischen dem Normalbetrieb und dem Betrieb mit Schubabschaltung bei einem mit Kraftstoff-Direkteinspritzung betriebenen Ottomotor. Die Vorrichtung (Umschaltvorrichtung 10) weist eine Steuereinheit 11 auf, die mit einem entsprechenden Softwareprogramm steuerbar ist. Des weiteren ist die Steuereinheit 11 mit einem Programmspeicher 12 und einem Datenspeicher 13 ausgebildet. In dem Datenspeicher 13 ist beispielsweise ein Drehmomentenmodell gespeichert, mit dessen Hilfe das vom Motor gelieferte aktuelle Drehmoment geschätzt werden kann. Weitere Einheiten zum Beispiel zur Bestimmung der Drehzahl und des Drehwinkels der Kurbelwelle sind vorsehbar.

Die Steuereinheit 11 ist des weiteren vorzugsweise über einen Bus 19 (Daten- und Steuerbus) mit entsprechenden Sensoren oder Stellern verbunden, die an dem Ottomotor 20 angeordnet sind. Zum Beispiel ist eine Einrichtung zur Drehwinkelerfassung 15, ein Stellglied für eine Drosselklappenverstellung 16, ein Drehzahlsensor 17, ein oder mehrere Einspritzventile 18 usw. vorgesehen. Diese Einheiten sind üblicherweise ohnehin vorhanden, da sie ohnehin für das Steuerprogramm des Motormanagementsystems benötigt werden.

In alternativer Ausgestaltung der Erfindung ist vorgesehen, dass das Steuerprogramm zur Steuerung des Übergangs zwischen dem Normalbetrieb in den Betrieb mit Schubabschaltung beziehungsweise umgekehrt beispielsweise als Unterprogramm im Managementsystem der Motorsteuerung enthalten ist. Dadurch kann in vorteilhafter Weise auf zusätzliche Hardware verzichtet werden.

Figur 4 zeigt in schematischer Darstellung ein Flussdiagramm, wie der Übergang vom Normalbetrieb in den Betrieb mit Schubabschaltung gesteuert wird. In Position 1 wird das Programm gestartet und nach Zurücknehmen der Luftmasse im Zylinder (Verstellung der Drosselklappe 16) der Zündwinkel in Richtung spät verstellt. In Position 3 wird abgefragt, ob der aktuelle Zündwinkel den vorgegebenen ersten Minimalwert für den Zündwinkel unterschreitet. Ist das (bei n) nicht der Fall, dann springt das Programm auf Position 2 zurück. Der Zündwinkel wird weiter zurückgenommen und die Abfrage in Position 3 erneut gestartet.

Unterschreitet nun der Zündwinkel ZW den vorgegebenen ersten Minimalwert, dann springt das Programm auf Position 4. Jetzt beginnt die Kraftstoffeinspritzung in der Kompressionsphase, so dass der Zündwinkel nach einem kurzen Anstieg auf den zweiten vorgegebenen Minimalwert zurückgenommen werden kann. Dadurch sinkt das Drehmoment weiter ab, so dass schließlich ein sanfter Übergang zur Schubabschaltung erreicht wird. Nach dem Umschalten in den Betrieb mit Schubabschaltung ist diese Programmroutine beendet.

Das Wiedereinsetzen aus der Schubabschaltung in den Normalbetrieb erfolgt prinzipiell in umgekehrter Reihenfolge. Zunächst wird geprüft, ob auf Grund der Drehmomentenanforderung überhaupt eine Kraftstoffeinspritzung in der Kompressionsphase erforderlich ist. Ist dies der Fall, dann wird zunächst wenigstens eine Teilmenge des Kraftstoffs in der Kompressionsphase abgesetzt. Dadurch steigt das Drehmoment soweit an, dass auf die komplette Einspritzung in der Ansaugphase umgeschaltet werden kann. Die Einspritzung kann nun auf den Normalbetrieb umgeschaltet werden, da ein sanfter Übergang zu erwarten ist.

## Patentansprüche

1. Verfahren zur Steuerung des Übergangs zwischen einem Normalbetrieb und einem Betrieb mit Schubabschaltung bei einem mit Kraftstoff-Direkteinspritzung betriebenen Ottomotor (20), wobei zur Vermeidung eines unzulässigen Drehmomentensprungs, der bei der Schubabschaltung durch Abschalten der Kraftstoffeinspritzung entsteht, der Zündwinkel (ZW) in Richtung spät (s) verstellt wird, **dadurch gekennzeichnet, dass** beim Übergang von dem Normalbetrieb auf den Betrieb mit Schubabschaltung zur weiteren Reduzierung des Drehmomentensprungs zunächst die angesaugte Luftmasse reduziert und danach der Zündwinkel (ZW) auf einen für diesen Betrieb vorgegebenen ersten Minimalwert zurückgenommen wird, bei dem noch eine zuverlässige Verbrennung des Kraftstoff-Luftgemisches gewährleistet ist und nach Erreichen des ersten Minimalwertes für den Zündwinkel (ZW) während einer Kompressionsphase Kraftstoff bei geschlossenen Ventilen in den Zylinder eingespritzt wird, wobei während der Kompressionsphase wenigstens eine Teilmenge des einzuspritzenden Kraftstoffs abgesetzt wird.

2. Verfahren nach Anspruch 1, wobei in der Kompressionsphase der Kraftstoff in Teilmengen oder als Einzelimpuls eingespritzt wird.

3. Verfahren nach Anspruch 1, **dadurch gekennzeichnet, dass** nach Erreichen des ersten Minimalwertes für den Zündwinkel (ZW) eine Teilmenge des einzuspritzenden Kraftstoffs während der Kompressionsphase des Ottomotors (20) eingespritzt wird.

4. Verfahren nach Anspruch 1, **dadurch gekennzeichnet, dass** die gesamte Kraftstoffmenge in der Kompressionsphase eingespritzt wird.

5. Verfahren nach Anspruch 1, **dadurch gekennzeichnet, dass** der Kraftstoff in Form einer Mehrfacheinspritzung in den Zylinder des Ottomotors (60) eingespritzt wird und der Zündwinkel (ZW) auf einen für die Mehrfacheinspritzung vorgegebenen niedrigeren zweiten Minimalwert zurückgenommen wird.

6. Verfahren nach Anspruch 5, **dadurch gekennzeichnet, dass** nach Erreichen des zweiten Minimalwertes die Einspritzung abgeschaltet und auf Schubbetrieb umgeschaltet wird.

7. Verfahren nach einem der vorhergehenden Ansprüche, **dadurch gekennzeichnet, dass** zum Wiedereinsetzen des Normalbetriebs des Ottomotors (20) zunächst wenigstens eine Teilmenge des einzuspritzenden Kraftstoffs in der Kompressionsphase abgesetzt wird.

8. Verfahren nach Anspruch 7, **dadurch gekennzeichnet, dass** zum Aufbau des Drehmomentes der Zündwinkel in Richtung Frühzündung (f) verstellt wird.

9. Verfahren nach Anspruch 8, **dadurch gekennzeichnet, dass** bei Erreichen des gewünschten Drehmomentes auf die Einspritzung in der Ansaugphase umgeschaltet wird.

10. Vorrichtung zur Steuerung des Übergangs zwischen dem Normalbetrieb und der Schubabschaltung bei einem mit Kraftstoff-Direkteinspritzung betriebenen Ottomotor (20) nach einem der vorhergehenden Ansprüche, mit einer Einrichtung zur Erfassung des Drehmomentes (DM) und des Zündwinkels (ZW), mit einer Verstelleinrichtung für die Zündung und der angesaugten Luftmasse, mit einer Steuereinrichtung für die Kraftstoffeinspritzung und mit einem Steuerprogramm, **dadurch gekennzeichnet, dass** das Programm derart ausgebildet ist, dass der Zündwinkel (ZW) zurückgenommen wird und beim Übergang von dem Normalbetrieb auf den Betrieb mit Schubabschaltung zur weiteren Reduzierung eines Drehmomentensprungs, welcher bei der Schubabschaltung durch Abschalten der Kraftstoffeinspritzung entsteht, zunächst die angesaugte Luftmasse reduziert und danach der Zündwinkel (ZW) auf einen für diesen Betrieb vorgegebenen ersten Minimalwert zurückgenommen wird, bei dem noch eine zuverlässige Verbrennung des Kraftstoff-Luftgemisches gewährleistet ist und nach Erreichen des ersten Minimalwertes für den Zündwinkel (ZW) während einer Kompressionsphase Kraftstoff bei geschlossenen Ventilen in den Zylinder eingespritzt wird, wobei während der Kompressionsphase wenigstens eine Teilmenge des einzuspritzenden Kraftstoffs während der Kompressionsphase abgesetzt wird.

11. Vorrichtung nach Anspruch 10, **dadurch gekennzeichnet, dass** der Kraftstoff in wenigstens zwei Teilmengen einspritzbar ist.

## Claims

1. Method for controlling the transition between normal operation and overrun fuel cut-off operation in a spark ignition engine (20) which is operated with direct fuel injection, wherein in order to avoid an unacceptable jump in torque which arises during the overrun fuel cut-off as a result of the fuel injection being switched off, the ignition angle (ZW) is adjusted in the retarded direction (s), **characterized in that** at the transition from the normal operation to overrun fuel cut-off operation, the sucked-in mass of air is firstly reduced in order to further reduce the jump in torque, and the ignition angle (ZW) is then decreased to a first minimum value which is predefined for this operation, and at which reliable combustion of the fuel/air mixture is still ensured, and after the first minimum value for the ignition angle (ZW) has been reached during a compression phase fuel is injected into the cylinder with the valves closed, wherein at least a partial quantity of the fuel to be injected is released during the compression phase.

2. Method according to Claim 1, wherein in the compression phase the fuel is injected in partial quantities or as an individual pulse.

3. Method according to Claim 1, **characterized in that** after the first minimum value for the ignition angle (ZW) has been reached, a partial quantity of the fuel to be injected is injected during the compression phase of the spark ignition engine (20).

4. Method according to Claim 1, **characterized in that** the entire quantity of fuel is injected in the compression phase.

5. Method according to Claim 1, **characterized in that** the fuel is injected in the form of a multiple injection into the cylinder of the spark ignition engine (60), and the ignition angle (ZW) is decreased to a relatively low second minimum value which is predefined for the multiple injection.

6. Method according to Claim 5, **characterized in that** after the second minimum value has been reached the injection is switched off and switching over to overrun fuel cut-off operation is carried out.

7. Method according to one of the preceding claims, **characterized in that** in order to resume the normal operation of the spark ignition engine (20) firstly at least a partial quantity of the fuel to be injected is output in the compression phase.

8. Method according to Claim 7, **characterized in that** in order to build up the torque the ignition angle is adjusted in the direction of early ignition (f).

9. Method according to Claim 8, **characterized in that** when the desired torque is reached, switching over to the injection in the induction phase is carried out.

10. Device for controlling the transition between the normal operation and the overrun fuel cut-off operation in a spark ignition engine (20) which is operated with direct fuel injection, according to one of the preceding claims, with a device for sensing the torque (DM) and the ignition angle (ZW), with an adjustment device for the ignition and the sucked-in air mass, with a control device for the fuel injection and with a control program, **characterized in that** the program is designed in such a way that the ignition angle (ZW) is decreased, and at the transition from the normal operation to the overrun fuel cut-off operation, in order to further reduce a jump in torque which occurs at the overrun fuel cut-off as a result of the switching off of the fuel injection, the sucked-in air mass is firstly reduced and then the ignition angle (ZW) is decreased to a first minimum value which is predefined for this operation and at which reliable combustion of the fuel/air mixture is still ensured, and after the first minimum value for the ignition angle (ZW) has been reached, fuel is injected into the cylinder with the valves closed during a compression phase, wherein during the compression phase at least a partial quantity of the fuel to be injected is output.

11. Device according to Claim 10, **characterized in that** the fuel can be injected in at least two partial quantities.

## Revendications

1. Procédé pour commander le passage entre un fonctionnement normal et un fonctionnement avec coupure d'alimentation en poussée sur un moteur à combustion interne (20) fonctionnant avec injection directe de carburant, dans lequel pour éviter un saut de couple inadmissible qui se produit en cas de coupure de l'alimentation en poussée par suite d'une coupure de l'injection de carburant, l'angle d'allumage (ZW) est déplacé en direction d'un retard (s), **caractérisé en ce que** lors du passage du fonctionnement normal au fonctionnement avec coupure d'alimentation en poussée, pour réduire encore le saut de couple, on réduit d'abord la masse d'air aspirée et ensuite on ramène l'angle d'allumage (ZW) à une première valeur minimale prévue pour ce fonctionnement, pour laquelle une combustion fiable du mélange air-carburant est encore garantie et après avoir atteint la première valeur minimale pour l'angle d'allumage (ZW) on injecte du carburant dans le cylindre pendant une phase de compression avec les soupapes fermées, dans lequel on arrête pendant la phase de compression au moins une quantité partielle du carburant à injecter.

2. Procédé selon la revendication 1, dans lequel dans la phase de compression on injecte le carburant en quantités partielles ou sous forme d'impulsion individuelle.

3. Procédé selon la revendication 1, **caractérisé en ce qu'**après avoir atteint la première valeur minimale pour l'angle d'allumage (ZW) on injecte une quantité partielle du carburant à injecter pendant la phase de compression du moteur à combustion interne (20).

4. Procédé selon la revendication 1, **caractérisé en ce que** l'on injecte toute la quantité de carburant dans la phase de compression.

5. Procédé selon la revendication 1, **caractérisé en ce que** l'on injecte le carburant sous la forme d'une injection multiple dans le cylindre du moteur à combustion interne (60) et on ramène l'angle d'allumage (ZW) à une deuxième valeur minimale plus basse prédéterminée pour l'injection multiple.

6. Procédé selon la revendication 5, **caractérisé en ce qu'**après avoir atteint la deuxième valeur minimale on coupe l'injection et on passe en fonctionnement en poussée.

7. Procédé selon l'une quelconque des revendications précédentes, **caractérisé en ce que** pour rétablir le fonctionnement normal du moteur à combustion interne (20) on arrête d'abord au moins une quantité partielle du carburant à injecter dans la phase de compression.

8. Procédé selon la revendication 7, **caractérisé en ce que** pour produire le couple on déplace l'angle d'allumage en direction d'un allumage avancé (f).

9. Procédé selon la revendication 8, **caractérisé en ce qu'**après avoir atteint le couple désiré on passe à l'injection dans la phase d'aspiration.

10. Dispositif de commande du passage entre le fonctionnement normal et le fonctionnement avec coupure d'alimentation en poussée sur un moteur à combustion interne (20) fonctionnant avec injection directe de carburant selon l'une quelconque des revendications précédentes, avec un dispositif pour la détection du couple (DM) et de l'angle d'allumage (ZW), avec un dispositif de réglage pour l'allumage et la quantité d'air aspirée, avec un dispositif de commande pour l'injection de carburant et avec un programme de commande, **caractérisé en ce que** le programme est configuré de telle manière que l'angle d'allumage (ZW) soit ramené en arrière et que lors du passage du fonctionnement normal au fonctionnement avec coupure d'alimentation en poussée, en vue de réduire encore un saut de couple qui se produit lors de la coupure d'alimentation en poussée par suite d'une coupure de l'injection de carburant, on réduise d'abord la masse d'air aspirée et ensuite on ramène l'angle d'allumage (ZW) à une première valeur minimale prédéterminée pour ce fonctionnement, pour laquelle une combustion fiable du mélange air-carburant est encore garantie, et qu'après avoir atteint la première valeur minimale pour l'angle d'allumage (ZW) on injecte du carburant dans le cylindre pendant une phase de compression avec les soupapes fermées, dans lequel on arrête au moins une quantité partielle du carburant à injecter pendant la phase de compression.

11. Dispositif selon la revendication 10, **caractérisé en ce que** le carburant peut être injecté en au moins deux quantités partielles.
